Europäisches Patentamt

European Patent Office

Office européen des brevets

(11) Veröffentlichungsnummer: **0 344 556**
**A1**

# EUROPÄISCHE PATENTANMELDUNG

(21) Anmeldenummer: **89109124.1**

(22) Anmeldetag: **20.05.89**

(51) Int. Cl.⁴: **F16L 11/12**

(30) Priorität: **26.05.88 DE 3817841**

(43) Veröffentlichungstag der Anmeldung:
**06.12.89 Patentblatt 89/49**

(84) Benannte Vertragsstaaten:
**DE ES FR GB IT SE**

(71) Anmelder: **AUDI AG**
**Auto-Union-Strasse 1 Postfach 220**
**D-8070 Ingolstadt(DE)**

(72) Erfinder: **Schäper, Siegfried, Dr.**
**Am Fort 5**
**D-8071 Wettstetten(DE)**
Erfinder: **Mineif, Peter**
**Krumenauerstrasse 52**
**D-8070 Ingolstadt(DE)**

(74) Vertreter: **Engelhardt, Harald**
**Audi AG Postfach 2 20**
**D-8070 Ingolstadt(DE)**

(54) **Kunststoffschlauch bzw. -rohr mit einer als Verstärkung dienenden Ummantelung zur Versorgung eines Kraftfahrzeugmotors mit Kraftstoff.**

(57) Die vorliegende Erfindung betrifft einen Kunststoffschlauch bzw. -rohr mit einer als Verstärkung dienenden Ummantelung zur Versorgung eines Kraftfahrzeugmotors mit Kraftstoff. Bei den bekannten Schläuchen und Rohren hat sich nachteilig bemerkbar gemacht, daß im Falle eines Brandes die Versorgung des Motors mit Benzin fortgeführt und hierdurch ein erhöhtes Gefahrenpotential aufgebaut wird. Hier schafft die Erfindung durch Unterbrechung der Kraftstoffzufuhr bei einem Motorbrand Abhilfe und zwar durch eine Dotierung des Kunststoffschlauches mit einem Treibmittel, welches den bei steigenden Temperaturen weicher werdenden Kunststoffschlauch aufgrund der dann auftretenden Gasbildung nach innen hin aufschäumt und so den Strömungsquerschnitt verstopft. Erfindungsgemäß werden also größere Folgeschäden bei einem Motorbrand vermieden und die Sicherheit der Insassen und des Kraftfahrzeuges selbst weiter erhöht.

EP 0 344 556 A1

## Kunststoffschlauch bzw. -rohr mit einer als Verstärkung dienenden Ummantelung zur Versorgung eines Kraftfahrzeugmotors mit Kraftstoff.

Die vorliegende Erfindung betrifft einen armierten Kunststoffschlauch bzw. -rohr nach dem Oberbegriff des Anspruchs 1.

Derartige Kunststoffschläuche gibt es im Stand der Technik in den unterschiedlichsten Ausführungsformen, wobei verschiedene Materialien zum Einsatz kommen. Sie gewährleisten die sichere Zufuhr des Kraftstoffes bzw. Benzins vom Tank bis zum Motor hin, wo letztendlich die Verbrennung stattfindet. Aus den verschiedensten Ursachen gibt es jedoch immer wieder versteckte Kabelbrände und auch offene Brände im Motorraum, deren Gefährlichkeit auf der Hand liegt. Nachteilig hat es sich bei solchen Situationen immer wieder bemerkbar gemacht, daß der Treibstoff weiterhin zum Motor gefördert wird. Dieses gilt insbesondere bei Motoren mit elektrischer Treibstoffpumpe. Die bei Bränden im Motorraum auftretende Hitze reicht aus, daß der Kunststoffschlauch bzw. die Rohrleitung soweit erweicht wird, daß das Benzin austritt und den Brand zusätzlich nährt.

Der Erfindung liegt die Aufgabe zugrunde, die geschilderten Nachteile zu vermeiden und die Sicherheit des Kraftfahrzeuges weiter zu verbessern, indem bei einem Kabel- und/oder Motorbrand aufgrund der dann steigenden Temperaturen eine weitere Zufuhr von Benzin unterbunden wird.

Diese Aufgabe wird durch den im Anspruch 1 gekennzeichneten Kunststoffschlauch gelöst. Erfindungsgemäß enthält dieser ein chemisches Treibmittel. Bei einer bestimmten, erhöhten Temperatur tritt dann die Zersetzung des Treibmittels auf, welches unter Gasbildung und Volumenvergrößerung den Kunststoff aufschäumt. Da die insbesondere aus einem dichten Metallgeflecht bestehende Ummantelung diesem Druck standhält, während die innenliegenden Zonen des Kunststoffschlauches in einem gewissen Ausmaß erweichen, wird der freie innere Schlauchquerschnitt durch den aufschäumenden Kunststoff verringert bzw. abgequetscht. Hierdurch wird die Kraftstoffzufuhr zum Motor hin unterbunden. Es dürfte einleuchten, daß unterschiedliche Treibmittel für diesen Zweck geeignet sind. Sichergestellt werden muß vor allem, daß die Zersetzung des Treibmittels nicht schon während der Herstellung des Rohres stattfindet. Durch ein Treibmittel mit einer Zersetzungstemperatur oberhalb der Verarbeitungstemperatur - unterstützt durch Zersetzungsinhibitoren, zweckmäßige Teilchengröße sowie definiert kurze Verweilzeitn in der Extrusionsanlage zum Herstellen des Schlauches - lassen sich Zersetzungs- und Erweichungsverhalten aufeinander abstimmen.

Weitere Vorteile und Merkmale gehen aus den vorstehenden Unteransprüchen hervor.

Im folgenden wird ein bevorzugtes Ausführungsbeispiel der Erfindung anhand der Zeichnung näher erläutert.

Es zeigt:

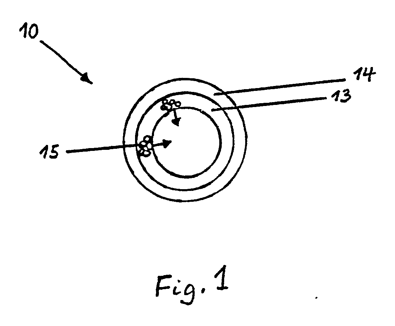

Fig. 1 eine schematische Querschnittsansicht durch einen erfindungsgemäß aufgebauten Kunststoffschlauch.

In Fig. 1 ist der erfindungsgemäße Kunststoffschlauch allgemein mit 10 bezeichnet. Er weist einen inneren Kunststoffschlauch 13 auf, z.B. aus Polylaurinlactam, welches bei Temperaturen zwischen 200 und 290° C vearbeitet werden kann. Geeignete Treibmittel, deren Zersetzungstemperatur oberhalb der Verarbeiturgstemperaturen liegen können, sind in Tabelle 1 angegeben. Sehr günstig ist das 5-Phenyltetrazol, welches allein Stickstoff als Treibgas abspaltet. In verarbeitungstechnisch schwierigen Fällen kann Trihydrozinotriazin eingesetzt werden, in besonders günstigen Fällen sogar das preiswerte Azodicarbonamid. Das Treibmittel wird in der Größenordnung von 1 % dem Kunststoff zugegeben. Für Kunststoffschläuche mit Werkstoffen niedrigerer Verarbeitungstemperatur, z.B. Polyäthylen oder Polyacetal, käme generell Azodicarbonamid infrage, u.U. mit einem Kicker (Zersetzungskatalysator) wie Zinkoxid, welches bezogen auf das Treibmittel, z.B. zu 5 %, beigegeben werden könnte.

Bei einem Brand im Motorraum treten an der Treibstoffleitung Temperaturen weit oberhalb des Zersetzungsbereiches der Treibmittel auf, so daß die Zersetzung des in dem Schlauchwerkstoff vorhandenen Treibmittels eingeleitet wird, während der Kunststoff erweicht. Durch die eingeleitete Gasbildung 15 tritt eine Volumenvergrößerung der Schicht 13 auf. Da die Ummantelung 14 durch das Metallgeflecht diesem Druck standhält, dehnt sich der Kunststoff im wesentlichen nach innen aus. Dabei wird erfindungsgemäß der Leitungsquerschnitt von Kunststoffschaum verstopft, wie dieses durch die nach innen gerichteten Pfeile angedeutet ist. Die Zufuhr des nicht gezeigten Benzins wird hierdurch sicher unterbrochen. Es dürfte einleuchten, daß der vom Tank bis hin zum Motorraum verlaufende Schlauch vollständig oder teilweise erfindungsgemäß aufgebaut sein kann.

Tabelle 1 [1]:
Gebräuchliche chemische Treibmittel für Kunststoffe

| Bezeichnung | Zersetzungs- bereich in Luft / °C | Gasausbeute ml / g | Spaltgas / % |
|---|---|---|---|
| modifiziertes Azodicarbonamid | 155 – 222 | 150–220 | $N_2/65$;CO/32; $CO_2/3$ |
| Azodicarbonamid | 205 – 215 | 220 | – " – |
| Isatosäure- anhydrid | 210 – 225 | 115 | $CO_2/100$ |
| p-Toluylensulfonyl- semicarbazid | 228 – 235 | 140 | $N_2/55$;$CO_2/37$;CO/2;$NH_3/3$ |
| 5-Phenyltetrazol | 240 – 250 | 190 | $N_2/100$ |
| Trihydrozinotri- azin | 275 | 225 | $N_2$; $NH_3$ |

Quelle: [1] Hurnik, H.; Chemische Treibmittel in:
Gächter, R.; Müller, H.; Taschenbuch der Kunststoff-
Additive, Hanser 1983

**Ansprüche**

1. Kunststoffschlauch bzw. -rohr mit einer als Verstärkung dienenden Ummantelung (14) zur Versorgung eines Kraftfahrzeugmotors mit Kraftstoff, dadurch gekennzeichnet, daß der Kunststoffschlauch (13) ein Treibmittel enthält.

2. Kunststoffschlauch nach Anspruch 1, dadurch gekennzeichnet, daß das Treibmittel nichtbrennbares Gas abspaltet, insbesondere $CO_2$, $N_2$ oder $H_2O$, und den Kunststoff des Kunststoffschlauches (13) aufschäumt.

3. Kunststoffschlauch nach Anspruch 1 und 2, dadurch gekennzeichnet, daß der Schlauch (13) aus Kunststoff und die Ummantelung (14) aus einem gegen die Kunststoffschmelze dichten Metallgeflecht oder aus einem Kunststoff besteht, dessen Wärmeformbeständigkeit über der des Schlauches und der Zersetzungstemperatur des Treibmittels liegt.

4. Kunststoffschlauch nach Anspruch 1, dadurch gekennzeichnet, daß das Treibmittel oberhalb der Verarbeitungstemperatur des Kunststoffes unter Gasbildung (15) zu reagieren beginnt und eine Volumenvergrößerung des Kunststoffes bewirkt.

5. Kunststoffschlauch nach Anspruch 1, dadurch gekennzeichnet, daß der Kunststoff unterhalb der Zersetzungstemperatur des Treibmittels erweicht und flexibel wird.

6. Kunststoffschlauch nach einem oder mehreren der Ansprüche 1 bis 5, dadurch gekennzeichnet, daß das Gewichtsverhältnis von Kunststoff : Treibmittel etwa 100 : 1 beträgt.

7. Kunststoffschlauch nach Anspruch 1, dadurch gekennzeichnet, daß die Wandstärke des Kunststoffschlauches etwa 1 bis 2 mm, die des Metallgeflechtes 0,2 mm beträgt.

8. Kunststoffschlauch nach einem oder mehreren der vorstehenden Ansprüche 1 bis 7, dadurch gekennzeichnet, daß das Treibmittel aus einer Kombination von verschiedenen Treibmitteln und die Zersetzungstemperatur beeinflussenden Zusatzstoffen besteht.

Fig. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 324 483 (AB VOLVO PENTA) <br> * Insgesamt * | 1 | F 16 L 11/12 |
| A | | 2-4,7 | |
| | --- | | |
| A | EP-A-0 265 612 (SIEMENS AG) <br> * Ansprüche 1,2,6 * <br> ----- | 1-4,6,8 | |

**RECHERCHIERTE SACHGEBIETE (Int. Cl.4)**

F 16 L

Der vorliegende Recherchenbericht wurde für alle Patentansprüche erstellt

| Recherchenort | Abschlußdatum der Recherche | Prüfer |
|---|---|---|
| DEN HAAG | 06-09-1989 | NARMINIO A. |